# EUROPEAN PATENT SPECIFICATION

(11) **EP 2 458 745 B1**
(45) Date of publication and mention of the grant of the patent: **23.08.2017**
(21) Application number: 09848407.4
(22) Date of filing: 14.12.2009
(51) Int. Cl.: H04B 17/00

(54) **TESTING DEVICE AND METHOD FOR A MULTIPLE-INPUT MULTIPLE-OUTPUT WIRELESS TERMINAL**
TESTVORRICHTUNG UND VERFAHREN FÜR EIN DRATRHLOSES MIMO-ENGERÄT
DISPOSITIF ET PROCÉDÉ DE TEST DESTINÉS À UN TERMINAL SANS FIL ENTRÉE MULTIPLE SORTIE MULTIPLE

(30) Priority: 21.08.2009 CN 200910091475
(43) Date of publication of application: 30.05.2012
(73) Proprietor: ZTE Corporation, Shenzhen, Guangdong 518057 (CN)
(72) Inventor: DING, Tiantian, Shenzhen Guangdong 518057 (CN); GUO, Yang, Shenzhen Guangdong 518057 (CN); YU, Zhong, Shenzhen Guangdong 518057 (CN); ZHI, Zhou, Shenzhen Guangdong 518057 (CN)
(74) Representative: J A Kemp
(86) International application number: PCT/CN2009/075543
(87) International publication number: WO 2011/020266

(56) References cited:
- WO-A2-2008/031112
- CN-A- 101 345 592
- CN-A- 101 496 439
- US-A1- 2007 243 826
- US-A1- 2008 151 763
- US-B1- 7 539 489
- ZTE: "Consideration on DL Transmission Modes in MIMO OTA Testing", 3GPP DRAFT; R4-092560 CONSIDERATION ON DL TRANSMISSION MODES IN MIMO OTA TESTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, CA; 20090703, 3 July 2009 (2009-07-03), XP050353773, [retrieved on 2009-07-03]

## Description

### Technical Field

The present invention relates to multi-in multi-out (MIMO) technology, and specifically to an apparatus and method for testing MIMO wireless terminal as described in the preamble of the independent claims. The features of the preamble of the independent claims are known from WO2008031112A2 and US2007243826A1..

### Background of the Related Art

In recent years, the MIMO technology has become one of main key technologies of the next generation of wireless communication, such as the long term evolution (LTE) plan of the 3^{rd} generation partnership project (3GPP), 802.16 family technology of broadband access standard of the institute of electrical and electronics engineers (IEEE), LTE-Advance technology and so on. The MIMO technology is a breakthrough in the radio frequency resource limitation, utilizing features of random fading and multipath delay dispersion of multiple transmission rates efficiently, improving the spectral efficiency and system performance of the new generation wireless communication system significantly without increasing the spectral bandwidth, thereby becoming a hot research of today's wireless communication.

Meanwhile, the wireless communication system and wireless terminal using the MIMO technology have gradually begun to be widely applied in practice. It is an issue focus on the radiation performance of a great variety of wireless terminals in the market. The radiation performance test includes final transmitting performance and reception performance of the wireless terminal. The method and standard for testing the radiation performance of the simple input simple output (SISO) wireless terminal have been applied maturely. The most common measurement scheme is an active test within a specific microwave chamber, for testing the space radio performance, such as the radiation power and so on, of the wireless terminal; or a passive test for examining the radiation performance of the wireless terminal in aspects of antenna radiation parameters, such as the gain, efficiency, pattern and so on, of the wireless terminal antenna. However, the testing and evaluating scheme and standard for the radiation performance of the wireless terminal with MIMO are still under discussion.

### Summary of the Invention

In view of that, the main purpose of the present invention is to provide an apparatus and method for testing a MIMO wireless terminal, wherein the simulation of output is in combination with the base station transmitting signal in MIMO downlink transmission mode during the test, which has a complete and reliable measurement result.

The features of the method and apparatus according to the present invention are defined in the independent claims, and the preferable features according to the present invention are defined in the dependent claims.

According to the scheme provided by the present invention, considering the influence of the system side MIMO downlink transmission mode, by the simulation of output in the test for the MIMO OTA radiation performance, especially for the reception sensitivity, combining the base station transmitting signal in the MIMO downlink transmission mode, fully consider the measurement for the different MIMO downlink transmission mode, and fully demonstrate the influence of the MIMO downlink transmission mode of the MIMO wireless communication system on the testing of the OTA radiation performance, especially the reception sensitivity of the MIMO wireless terminal, thereby completing the measurement scheme of the OTA radiation performance, especially the reception sensitivity of the MIMO wireless terminal and providing a more complete and reliable measurement result for the measurement of the radiation performance of the tested MIMO wireless terminal.

Furthermore, by way of combining the multipath fading channel simulator with the MIMO transmission mode selecting unit provided by the present invention, a more similar multipath fading delay signal is output, to measure the radiation performance, especially reception sensitivity of the tested MIMO wireless terminal.

### Brief Description of Drawings

FIG. 1 is a schematic diagram of the structure of the MIMO transmission mode selecting unit of the present invention;
FIG. 2 is a schematic diagram 1 of the structure of the MIMO OTA testing apparatus of the present invention;
FIG. 3 is a schematic diagram 2 of the structure of the MIMO OTA testing apparatus of the present invention;
FIG. 4 is a MIMO downlink transmission mode selecting flowchart during testing the MIMO wireless terminal in the present invention; and
FIG. 5 is a flowchart of testing of the MIMO wireless terminal of the present invention.

### Preferred Embodiments of the Present Invention

In the new generation of wireless communication system using the MIMO technology, the base station side and wireless terminal side usually adopt the MIMO technology, therefore it is required to consider the case of adopting the MIMO technology in the base station side in the testing and evaluating scheme of radiation performance of the wireless terminal with MIMO, that is a MIMO wireless terminal. Especially for the testing for the reception sensitivity of the MIMO wireless terminal, the MIMO wireless signal output by simulating base station needs to be taken into account especially. In general, the MIMO downlink transmission has multiple modes such as: single antenna mode, closed-loop spatial multiplexing, open-loop spatial multiplexing, transmit diversity, spatial multiplexing, multi-user MIMO, pre-coding, and beamforming and so on.

In the present invention, during the real-world over-the-air OTA test for the MIMO wireless terminal, the MIMO downlink transmission mode that currently requires testing is selected from multiple configured MIMO downlink transmission modes, and the downlink test signal that conforms to the feature of the selected MIMO downlink transmission mode is output.

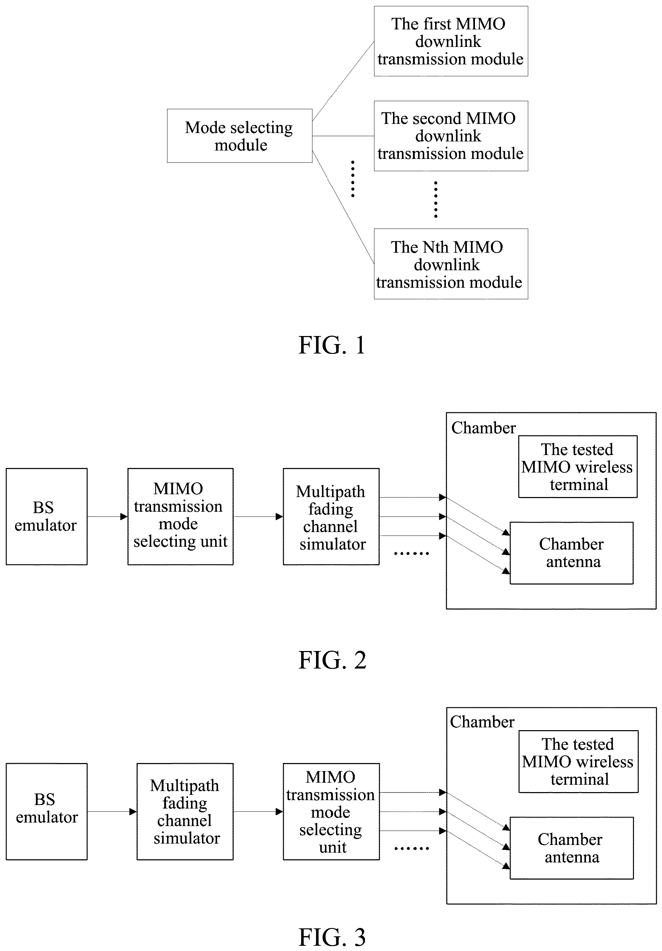

In the scheme of the present invention, the main idea is to add a MIMO transmission mode selecting unit in the MIMO OTA testing apparatus, the structure of which is as shown in FIG. 1, and the MIMO transmission mode selecting unit includes: a mode selecting module and a plurality of MIMO downlink transmission modules, wherein the mode selecting module is configured to: during the OTA test for the MIMO wireless terminal, select the MIMO downlink transmission mode that currently requires testing, and trigger the corresponding MIMO downlink transmission module; the MIMO downlink transmission mode is configured to output the downlink test signal that conforms to the feature of the selected MIMO downlink transmission mode according to the triggering of the mode selecting module.

The mode selecting module may specifically implement triggering the MIMO downlink transmission module by way of closing or opening the switch; or may implement triggering the MIMO downlink transmission module by way of sending a control command to the corresponding MIMO downlink transmission module. Each MIMO downlink transmission module corresponds to one MIMO downlink transmission mode, and different MIMO downlink transmission modules correspond to different MIMO downlink transmission modes.

During the process of OTA test for the MIMO wireless terminal, the mode selecting module may select only one MIMO downlink transmission mode at a time; or select multiple MIMO downlink transmission modes or even all downlink transmission modes at a time. When multiple MIMO downlink transmission modes are selected, the mode selecting module may test the MIMO wireless terminal in various MIMO downlink transmission modes one by one in a polling way, that is, the mode selecting module triggers the test for the next MIMO downlink transmission mode when confirming the test of one MIMO downlink transmission mode is finished.

The MIMO transmission mode selecting unit provided by the present invention may be added between the base station (BS) emulator and the multipath fading channel simulator in the MIMO OTA apparatus, as shown in FIG. 2; or may be added after the multipath fading channel simulator in the MIMO OTA apparatus, as shown in FIG. 3.

In the structure shown in FIG. 2, the BS emulator is configured to simulate the base station outputting a signal to the MIMO transmission mode selecting unit; the MIMO transmission mode selecting unit is configured to receive the signal from the BS emulator and then select the MIMO downlink transmission mode that currently requires testing from multiple configured MIMO downlink transmission modes, and output the downlink signal that conforms to the feature of the selected MIMO downlink transmission mode to the multipath fading channel simulator; the multipath fading channel simulator is configured to form a multipath fading delay signal from the downlink signal from the MIMO transmission mode selecting unit, and input the multipath fading delay signal into a chamber, to test the MIMO wireless terminal that is to be tested.

In the structure shown in FIG. 3, the BS emulator is configured to simulate the BS outputting a signal to the multipath fading channel simulator; the multipath fading channel simulator is configured to form a multipath fading delay signal from the signal from the BS emulator, and input the multipath fading delay signal to the MIMO transmission mode selecting unit; the MIMO transmission mode selecting unit is configured to receive the multipath fading delay signal from the multipath fading channel simulator and then select the MIMO downlink transmission mode that currently requires testing from multiple configured MIMO downlink transmission modes, and output the multipath fading delay signal that conforms to the feature of the selected MIMO downlink transmission mode into a chamber, to test the MIMO wireless terminal that is to be tested.

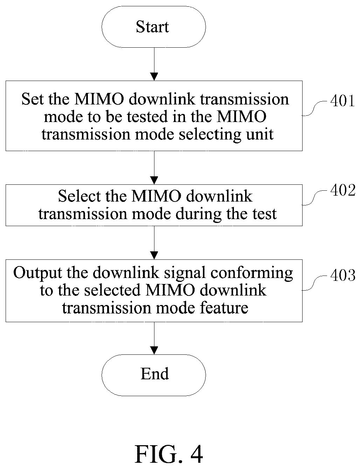

FIG. 4 is a MIMO downlink transmission mode selecting flowchart during testing the MIMO wireless terminal in the present invention, as shown in FIG. 4, which specifically includes:
Step 401, the tester presets the MIMO downlink transmission mode to be tested in the MIMO transmission mode selecting unit.

The step of setting the MIMO downlink transmission mode to be tested mentioned herein refers to setting each MIMO downlink transmission mode that may have a test requirement rather than all of the MIMO downlink transmission modes for which the test is finished in one testing process. For example, according to the testing requirement, three MIMO downlink transmission modes to be tested are preset: transmit diversity, spatial multiplexing and multi-user MIMO, and in a certain test, only the mode of spatial multiplexing may be as the MIMO downlink transmission mode that needs to be tested of this test.

According to requirement of test, the tester pre-configures each MIMO downlink transmission module in the MIMO transmission mode selecting unit, to correspond to each MIMO downlink transmission mode to be tested, for example, configuring three MIMO downlink transmission modules to be tested which respectively correspond to three MIMO downlink transmission modes, single antenna mode, closed-loop spatial multiplexing and open-loop spatial multiplexing.

Step 402: during the process of OTA test for the MIMO wireless terminal, the MIMO transmission mode selecting unit selects the MIMO downlink transmission mode that requires testing. The MIMO transmission mode selecting unit may select the MIMO downlink transmission mode that requires testing according to the input of the tester or the self configuration.

Step 403: the MIMO transmission mode selecting unit outputs the downlink test signal conforming to the feature of the selected MIMO downlink transmission mode.

During the OTA test for the MIMO wireless terminal, the MIMO transmission mode selecting unit may select only one MIMO downlink transmission mode at a time; or select multiple MIMO downlink transmission modes or even all downlink transmission modes at a time. When one MIMO downlink transmission mode is selected, selecting the corresponding MIMO downlink transmission mode may be realized by way of closing or opening a switch. When multiple MIMO downlink transmission modes are selected, the MIMO transmission mode selecting module may realize the selecting of various MIMO downlink transmission modes one by one in a polling way, that is, the MIMO transmission mode selecting unit selects the next MIMO downlink transmission mode to continue the OTA test for the MIMO wireless terminal when confirming the test of one MIMO downlink transmission mode is finished, that is to say, repeat the step 403 in each MIMO downlink transmission mode.

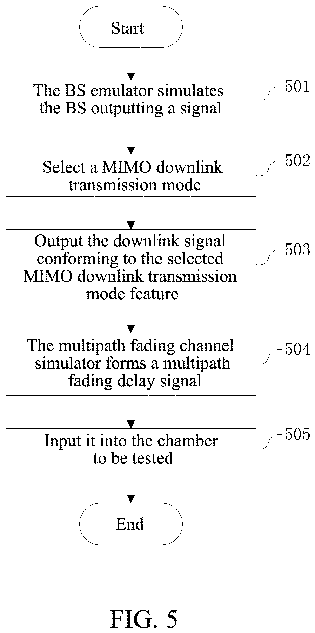

FIG. 5 is a flowchart of testing of the MIMO wireless terminal of the present invention, and as shown in FIG. 5, it specifically includes:
Step 501: the BS emulator simulates the BS outputting a signal to the MIMO transmission mode selecting unit.
Step 502: the MIMO transmission mode selecting unit receives the signal from the BS emulator, and then selects the MIMO downlink transmission mode that currently requires testing from multiple configured MIMO downlink transmission modes.
Step 503: the MIMO transmission mode selecting unit outputs the downlink signal that conforms to the feature of selected MIMO downlink transmission mode to the multipath fading channel simulator.
Step 504: the multipath fading channel simulator forms a multipath fading delay signal from the downlink signal from the MIMO transmission mode selecting unit.
Step 505: the multipath fading channel simulator inputs the multipath fading delay signal into a chamber, to test the MIMO wireless terminal that is to be tested.

If the MIMO transmission mode selecting unit selects multiple MIMO downlink transmission modes, repeat the steps 503∼505 by way of polling.

In combination with the description of FIG. 3, the multipath fading channel simulator may form the multipath fading delay signal firstly, and then the MIMO transmission mode selecting unit outputs the multipath fading delay signal that conforms to the feature of the selected MIMO downlink transmission mode.

In the present invention, the test for the radiation performance of the MIMO wireless terminal in the chamber may be a chamber measurement method, or may be a reverberation chamber measurement method.

The above description is only the preferred embodiment of the present invention, which is not intended to limit the protection scope of the present invention. Obviously, those skilled in the art may make various changes and variations to the present invention without departing from the scope of the present invention. Thus, if these changes and variations of the present invention fall into the scope of the claims of the present invention, they are also included in the present invention.

### Industrial Applicability

The technical scheme provided by the present invention takes the influence of the system side MIMO downlink transmission mode into account, and in the test for the MIMO OTA radiation performance, especially for the reception sensitivity, the simulation of output combines with the base station transmitting signal of MIMO downlink transmission mode, fully considering the measurement for different MIMO downlink transmission modes, and fully demonstrating the influence of the MIMO downlink transmission mode of the MIMO wireless communication system on the testing of the OTA radiation performance, especially the reception sensitivity of the MIMO wireless terminal, thereby completing the measurement scheme of the OTA radiation performance, especially the reception sensitivity testing of the MIMO wireless terminal and providing a more complete and reliable measurement result for the measurement of the radiation performance of the tested MIMO wireless terminal.

Furthermore, by combining the multipath fading channel simulator with the MIMO transmission mode selecting unit provided by the present invention, a more similar multipath fading delay signal is output, to measure the radiation performance, especially reception sensitivity of the tested MIMO wireless terminal.

## Claims

1. An apparatus for testing a multi-in multi-out, MIMO, wireless terminal, comprising a MIMO transmission mode selecting unit, wherein the MIMO transmission mode selecting unit comprises:
a mode selecting module, which is configured to: during a real-world over-the-air, OTA, test for the MIMO wireless terminal, select a MIMO downlink transmission mode that requires testing, and trigger a MIMO downlink transmission module corresponding to the selected MIMO downlink transmission mode; and
the MIMO downlink transmission module, which is configured to output a downlink test signal that conforms to a feature of the selected MIMO downlink transmission mode according to triggering of the mode selecting module;
**characterized by** further comprising: a base station, BS, emulator and a multipath fading channel simulator, wherein:
the BS emulator is configured to simulate a base station outputting a signal to the MIMO transmission mode selecting unit;
the MIMO transmission mode selecting unit is further configured to receive the signal from the BS emulator and then select the MIMO downlink transmission mode that requires testing from multiple configured MIMO downlink transmission modes, and output a downlink signal that conforms to the feature of the selected MIMO downlink transmission mode to the multipath fading channel simulator; and
the multipath fading channel simulator is configured to form a multipath fading delay signal from the downlink signal from the MIMO transmission mode selecting unit, and input the multipath fading delay signal into a chamber to test the MIMO wireless terminal that is to be tested;
or **characterized by** further comprising: a base station, BS, emulator and a multipath fading channel simulator, wherein:
the BS emulator is configured to simulate a base station outputting a signal to the multipath fading channel simulator;
the multipath fading channel simulator is configured to form a multipath fading delay signal from the signal from the BS emulator, and input the multipath fading delay signal to the MIMO transmission mode selecting unit; and
the MIMO transmission mode selecting unit is further configured to receive the multipath fading delay signal from the multipath fading channel simulator and then select the MIMO downlink transmission mode that requires testing from multiple configured MIMO downlink transmission modes, and output the multipath fading delay signal that conforms to the feature of the selected MIMO downlink transmission mode into a chamber to test the MIMO wireless terminal that is to be tested.

2. The apparatus according to claim 1, wherein the MIMO downlink transmission mode comprises one or more of: single antenna mode, closed-loop spatial multiplexing, open-loop spatial multiplexing, transmit diversity, spatial multiplexing, multi-user MIMO, pre-coding and beamforming.

3. An apparatus for selecting a multi-in multi-out, MIMO, wireless terminal transmission mode, comprising:
a mode selecting module, which is configured to: during a real-world over-the-air, OTA, test for a MIMO wireless terminal, select a MIMO downlink transmission mode that requires testing, and trigger a MIMO downlink transmission module corresponding to the selected MIMO downlink transmission mode; and
the MIMO downlink transmission module, which is configured to output a downlink test signal that conforms to a feature of the selected MIMO downlink transmission mode according to triggering of the mode selecting module;
**characterized in that** the apparatus is further configured to:
receive a signal from a base station, BS, emulator and then select the MIMO downlink transmission mode that requires testing from multiple configured MIMO downlink transmission modes, and output a downlink signal that conforms to the feature of the selected MIMO downlink transmission mode to a multipath fading channel simulator which will form a multipath fading delay signal from the downlink signal from the MIMO transmission mode selecting unit, and input the multipath fading delay signal into a chamber to test the MIMO wireless terminal that is to be tested;
or **characterized in that** the apparatus is further configured to:
receive a multipath fading delay signal formed from the signal from a base station, BS emulator by a multipath fading channel simulator and then select the MIMO downlink transmission mode that requires testing from multiple configured MIMO downlink transmission modes, and output the multipath fading delay signal that conforms to the feature of the selected MIMO downlink transmission mode into a chamber, to test the MIMO wireless terminal that is to be tested.

4. The apparatus according to claim 3, wherein, the MIMO downlink transmission mode comprises one or more of: single antenna mode, closed-loop spatial multiplexing, open-loop spatial multiplexing, transmit diversity, spatial multiplexing, multi-user MIMO, pre-coding and beamforming.

5. A method for testing a multi-in multi-out, MIMO, wireless terminal, comprising:
during a real-world over-the-air, OTA, test for the MIMO wireless terminal, selecting (502) a MIMO downlink transmission mode that requires testing from multiple configured MIMO downlink transmission modes, and outputting (503) a downlink test signal that conforms to a feature of the selected MIMO downlink transmission mode;
**characterized in that**:
before the step of selecting the MIMO downlink transmission mode that requires testing, the method further comprises: a base station, BS, emulator simulating a base station outputting a signal to a MIMO transmission mode selecting unit (501);
wherein the step of outputting the downlink test signal that conforms to the feature of the selected MIMO downlink transmission mode comprises: the MIMO transmission mode selecting unit receiving the signal from the BS emulator and then selecting the MIMO downlink transmission mode that requires testing from multiple configured MIMO downlink transmission modes, and outputting a downlink signal that conforms to the feature of selected MIMO downlink transmission mode to the multipath fading channel simulator; and
after the step of outputting the downlink test signal that conforms to the feature of the selected MIMO downlink transmission mode, the method further comprises: a multipath fading channel simulator forming (504) a multipath fading delay signal from the downlink signal, and inputting the multipath fading delay signal into a chamber, to test the MIMO wireless terminal to be tested (505);
or **characterized in that**:
before the step of selecting the MIMO downlink transmission mode that requires testing, the method further comprises: a base station, BS, emulator simulating a base station outputting a signal to a multipath fading channel simulator, and the multipath fading channel simulator forming a multipath fading delay signal from the signal and inputting the multipath fading delay signal to a MIMO transmission mode selecting unit; and
wherein the step of outputting the downlink test signal that conforms to the feature of the selected MIMO downlink transmission mode comprises: the MIMO transmission mode selecting unit outputting the multipath fading delay signal that conforms to the feature of the selected MIMO downlink transmission mode into a chamber, to test the MIMO wireless terminal that is to be tested.

6. The method according to claim 5, further comprising: presetting a MIMO downlink transmission mode to be tested.

7. The method according to claim 5, wherein, the step of testing the MIMO wireless terminal that is to be tested comprises: testing the MIMO wireless terminal that is to be tested by a chamber measurement method or a reverberation chamber measurement method.

8. The method according to any one of claims 5-6, wherein, the MIMO downlink transmission mode comprises one or more of: single antenna mode, closed-loop spatial multiplexing, open-loop spatial multiplexing, transmit diversity, spatial multiplexing, multi-user MIMO, pre-coding and beamforming; and/or,
when one said MIMO downlink transmission mode is selected, the step of selecting the MIMO downlink transmission mode that requires testing is realized by way of closing or opening a switch to select the MIMO downlink transmission mode that requires testing; when multiple said MIMO downlink transmission modes are selected, the step of selecting the MIMO downlink transmission mode that requires testing is realized by selecting the MIMO downlink transmission modes that require testing one by one in a polling way.

## Patentansprüche

1. Vorrichtung zum Testen einer drahtlosen Multi-In-Multi-Out- MIMO - Endvorrichtung, die eine MIMO-Übertragungsmodusauswahleinheit umfasst, wobei die MIMO-Übertragungsmodusauswahleinheit umfasst:
ein Modusauswahlmodul, das konfiguriert ist: während eines wirklichen Over-the-air-OTA -Tests für die drahtlose MIMO-Endvorrichtung, Auswählen eines MIMO-Abwärtsstreckenübertragungsmodus, der ein Testen erfordert, und triggern eines MIMO-Abwärtsstreckenübertragungsmoduls, das dem ausgewählten MIMO-Abwärtsstreckenübertragungsmodus entspricht; und
das MIMO-Abwärtsstreckenübertragungsmodul, das konfiguriert ist, ein Abwärtsstreckentestsignal, das einem Merkmal des ausgewählten MIMO-Abwärtsstreckenübertragungsmodus entspricht, gemäß dem Triggern des Modusauswahlmoduls auszugeben;
**dadurch gekennzeichnet, dass** sie weiter umfasst: einen BS-Emulator und einen Mehrwegeschwundkanalsimulator, wobei:
der BS-Emulator konfiguriert ist, eine Basisstation zu simulieren, die ein Signal an die MIMO-Übertragungsmodusauswahleinheit ausgibt;
die MIMO-Übertragungsmodusauswahleinheit weiter konfiguriert ist, das Signal vom BS-Emulator zu empfangen und dann den MIMO-Abwärtsstreckenübertragungsmodus, der Testen erfordert, von mehreren konfigurierten MIMO-Abwärtsstreckenübertragungsmodi auszuwählen und ein Abwärtsstreckensignal, das dem Merkmal des ausgewählten MIMO-Abwärtsstreckenübertragungsmodus entspricht, an den Mehrwegeschwundkanalsimulator auszugeben; und
der Mehrwegeschwundkanalsimulator konfiguriert ist, ein Mehrwegeschwundverzögerungssignal von dem Abwärtsstreckensignal von der MIMO-Übertragungsmodusauswahleinheit zu bilden und das Mehrwegeschwundverzögerungssignal in eine Kammer einzugeben, um die zu testende drahtlose MIMO-Endvorrichtung zu testen;
oder **dadurch gekennzeichnet, dass** sie weiter umfasst: einen BS-Emulator und einen Mehrwegeschwundkanalsimulator, wobei:
der BS-Emulator konfiguriert ist, eine Basisstation zu simulieren, die ein Signal an den Mehrwegeschwundkanalsimulator ausgibt;
der Mehrwegeschwundkanalsimulator konfiguriert ist, ein Mehrwegeschwundverzögerungssignal von dem Signal von dem BS-Emulator zu bilden und das Mehrwegeschwundverzögerungssignal in die MIMO-Übertragungsmodusauswahleinheit einzugeben; und
die MIMO-Übertragungsmodusauswahleinheit weiter konfiguriert ist, das Mehrwegeschwundverzögerungssignal vom Mehrwegeschwundkanalsimulator zu empfangen und dann den MIMO-Abwärtsstreckenübertragungsmodus, der Testen erfordert, aus mehreren konfigurierten MIMO-Abwärtsstreckenübertragungsmodi auszuwählen und das Mehrwegeschwundverzögerungssignal, das dem Merkmal des ausgewählten MIMO-Abwärtsstreckenübertragungsmodus entspricht, in eine Kammer auszugeben, um die zu testende drahtlose MIMO-Endvorrichtung zu testen.

2. Vorrichtung nach Anspruch 1, wobei der MIMO-Abwärtsstreckenübertragungsmodus eines oder mehrere umfasst von:
Einzelantennenmodus, Closed-Loop-Raummultiplexen, Open-Loop-Raummultiplexen, Sendediversität, Raummultiplexen, Mehrbenutzer-MIMO, Vorcodierung und Strahlformung.

3. Vorrichtung zum Auswählen eines drahtlosen MIMO-Endvorrichtung-Übertragungsmodus, umfassend:
ein Modusauswahlmodul, das konfiguriert ist: während eines wirklichen OTA-Tests für eine drahtlose MIMO-Endvorrichtung, Auswählen eines MIMO-Abwärtsstreckenübertragungsmodus, der ein Testen erfordert, und triggern eines MIMO-Abwärtsstreckenübertragungsmoduls, das dem ausgewählten MIMO-Abwärtsstreckenübertragungsmodus entspricht; und
das MIMO-Abwärtsstreckenübertragungsmodul, das konfiguriert ist, ein Abwärtsstreckentestsignal, das einem Merkmal des ausgewählten MIMO-Abwärtsstreckenübertragungsmodus entspricht, gemäß dem Triggern des Modusauswahlmoduls auszugeben;
**dadurch gekennzeichnet, dass** die Vorrichtung weiter konfiguriert ist:
ein Signal von einem BS-Emulator zu empfangen und dann den MIMO-Abwärtsstreckenübertragungsmodus, der Testen erfordert, von mehreren konfigurierten MIMO-Abwärtsstreckenübertragungsmodi auszuwählen und ein Abwärtsstreckensignal, das dem Merkmal des ausgewählten MIMO-Abwärtsstreckenübertragungsmodus entspricht, an einen Mehrwegeschwundkanalsimulator auszugeben, der ein Mehrwegeschwundverzögerungssignal von dem Abwärtsstreckensignal von der MIMO-Übertragungsmodusauswahleinheit bildet, und das Mehrwegeschwundverzögerungssignal in eine Kammer einzugeben, um die zu testende drahtlose MIMO-Endvorrichtung zu testen;
oder **dadurch gekennzeichnet, dass** die Vorrichtung weiter konfiguriert ist:
ein Mehrwegeschwundverzögerungssignal, das aus dem Signal von einem BS-Emulator gebildet ist, durch einen Mehrwegeschwundkanalsimulator zu empfangen und dann den MIMO-Abwärtsstreckenübertragungsmodus, der Testen erfordert, von mehreren konfigurierten MIMO-Abwärtsstreckenübertragungsmodi auszuwählen und das Mehrwegeschwundverzögerungssignal, das dem Merkmal des ausgewählten MIMO-Abwärtsstreckenübertragungsmodus entspricht, in eine Kammer auszugeben, um die zu testende drahtlose MIMO-Endvorrichtung zu testen.

4. Vorrichtung nach Anspruch 3, wobei der MIMO-Abwärtsstreckenübertragungsmodus eines oder mehrere umfasst von:
Einzelantennenmodus, Closed-Loop-Raummultiplexen, Open-Loop-Raummultiplexen, Sendediversität, Raummultiplexen, Mehrbenutzer-MIMO, Vorcodierung und Strahlformung.

5. Verfahren zum Testen einer drahtlosen MIMO-Endvorrichtung, umfassend:
während eines wirklichen Over-the-air- OTA -Tests für die drahtlose MIMO-Endvorrichtung, Auswählen (502) eines MIMO-Abwärtsstreckenübertragungsmodus, der Testen erfordert, aus mehreren konfigurierten MIMO-Abwärtsstreckenübertragungsmodi und Ausgeben (503) eines Abwärtsstreckentestsignals, das einem Merkmal des ausgewählten MIMO-Abwärtsstreckenübertragungsmodus entspricht;
**dadurch gekennzeichnet, dass**:
vor dem Schritt des Auswählens des MIMO-Abwärtsstreckenübertragungsmodus, der Testen erfordert, das Verfahren ferner umfasst: einen BS-Emulator, der eine Basisstation simuliert, die ein Signal an eine MIMO-Übertragungsmodusauswahleinheit (501) ausgibt;
wobei der Schritt des Ausgebens des Abwärtsstreckentestsignals, das dem Merkmal des ausgewählten MIMO-Abwärtsstreckenübertragungsmodus entspricht, umfasst: dass die MIMO-Übertragungsmodusauswahleinheit das Signal vom BS-Emulator empfängt und dann den MIMO-Abwärtsstreckenübertragungsmodus, der Testen erfordert, aus mehreren konfigurierten MIMO-Abwärtsstreckenübertragungsmodi auswählt und ein Abwärtsstreckensignal, das dem Merkmal des ausgewählten MIMO-Abwärtsstreckenübertragungsmodus entspricht, an den Mehrwegeschwundkanalsimulator ausgibt; und
nach dem Schritt des Ausgebens des Abwärtsstreckentestsignals, das dem Merkmal des ausgewählten MIMO-Abwärtsstreckenübertragungsmodus entspricht, das Verfahren weiter umfasst: einen Mehrwegeschwundkanalsimulator, der ein Mehrwegeschwundverzögerungssignal von dem Abwärtsstreckensignal bildet (504) und das Mehrwegeschwundverzögerungssignal in eine Kammer eingibt, um die zu testende drahtlose MIMO-Endvorrichtung zu testen (505);
oder **dadurch gekennzeichnet, dass**:
vor dem Schritt des Auswählens des MIMO-Abwärtsstreckenübertragungsmodus, der Testen erfordert, das Verfahren ferner umfasst: einen BS-Emulator, der, der eine Basisstation simuliert, die ein Signal an einen Mehrwegeschwundkanalsimulator ausgibt, und dass der Mehrwegeschwundkanalsimulator ein Mehrwegeschwundverzögerungssignal von dem Signal bildet und das Mehrwegeschwundverzögerungssignal in eine MIMO-Übertragungsmodusauswahleinheit eingibt; und
wobei der Schritt des Ausgebens des Abwärtsstreckentestsignals, das dem Merkmal des ausgewählten MIMO-Abwärtsstreckenübertragungsmodus entspricht, umfasst: dass die MIMO-Übertragungsmodusauswahleinheit das Mehrwegeschwundverzögerungssignal, das dem Merkmal des ausgewählten MIMO-Abwärtsstreckenübertragungsmodus entspricht, in eine Kammer ausgibt, um die zu testende drahtlose MIMO-Endvorrichtung zu testen.

6. Verfahren nach Anspruch 5, ferner umfassend: Voreinstellen eines zu testenden MIMO-Abwärtsstreckenübertragungsmodus.

7. Verfahren nach Anspruch 5, wobei der Schritt des Testens der zu testenden drahtlosen MIMO-Endvorrichtung umfasst: Testen der zu testenden drahtlosen MIMO-Endvorrichtung mittels eines Kammer-Messverfahrens oder eines Nachhallkammer-Messverfahrens.

8. Verfahren nach einem der Ansprüche 5 bis 6, wobei der MIMO-Abwärtsstreckenübertragungsmodus eines oder mehrere umfasst von:
Einzelantennenmodus, Closed-Loop-Raummultiplexen, Open-Loop-Raummultiplexen, Sendediversität, Raummultiplexen, Mehrbenutzer-MIMO, Vorcodierung und Strahlformung; und/oder,
wenn einer des MIMO-Abwärtsstreckenübertragungsmodus ausgewählt ist, der Schritt des Auswählens des MIMO-Abwärtsstreckenübertragungsmodus, der Testen erfordert, mittels Schließen oder Öffnen eines Schalters realisiert wird, um den MIMO-Abwärtsstreckenübertragungsmodus auszuwählen, der Testen erfordert; wenn mehrere der MIMO-Abwärtsstreckenübertragungsmodi ausgewählt sind, der Schritt des Auswählens des MIMO-Abwärtsstreckenübertragungsmodus, der Testen erfordert, durch Auswählen der MIMO-Abwärtsstreckenübertragungsmodi, die Testen erfordern, nacheinander auf eine Abfrageweise realisiert wird.

## Revendications

1. Dispositif de test destines à un terminal sans fil entrée multiple sortie multiple (MIMO), comprenant une unité de sélection de mode de transmission MIMO, dans lequel l'unité de sélection de mode de transmission MIMO comprend :
un module de sélection de mode, qui est conçu pour : lors d'un test réel en liaison radio (OTA) du terminal sans fil MIMO, sélectionner un mode de transmission de liaison descendante MIMO qui doit être testé, et déclencher un module de transmission de liaison descendante MIMO correspondant au mode de transmission de liaison descendante MIMO sélectionné ; et
le module de transmission de liaison descendante MIMO, qui est conçu pour émettre un signal de test de liaison descendante qui est conforme à une caractéristique du mode de transmission de liaison descendante MIMO selon le déclenchement du module de sélection de mode ;
**caractérisé en ce qu'**il comprend en outre : une station de base (BS), un émulateur, un simulateur de voie à évanouissement par trajets multiples,
l'émulateur de BS est conçu pour simuler une station de base émettant un signal vers l'unité de sélection de mode de transmission MIMO ;
l'unité de sélection de mode de transmission MIMO est en outre conçue pour recevoir le signal depuis l'émulateur de BS et puis sélectionner le mode de transmission de liaison descendante MIMO qui doit être testé depuis des modes de transmission de liaison descendante MIMO configurés et émettre un signal de liaison descendante qui est conforme à la caractéristique du mode de transmission de liaison descendante MIMO sélectionné vers le simulateur de voie à évanouissement par trajets multiples; et
le simulateur de voie à évanouissement par trajets multiples étant conçu pour former un signal de retard à partir du signal de liaison descendante provenant de l'unité de sélection de mode de transmission MIMO et entrer le signal de retard d'évanouissement par trajets multiples dans une chambre pour tester le terminal sans fil MIMO qui doit être testé ;
ou **caractérisé en ce qu'**il comprend en outre : une station de base (BS), un émulateur et un simulateur de voie à évanouissement par trajets multiples,
l'émulateur de BS étant conçu pour simuler une station de base émettant un signal vers le simulateur de voie à évanouissement par trajets multiples ;
le simulateur de voie à évanouissement par trajets multiples étant conçu pour former un signal de retard d'évanouissement par trajets multiples à partir du signal provenant de l'émulateur de BS, et entrer le signal de retard d'évanouissement par trajets multiples dans l'unité de sélection de mode de transmission MIMO ; et
l'unité de sélection de mode de transmission MIMO étant en outre conçue pour recevoir le signal de retard d'évanouissement par trajets multiples provenant du simulateur de voie à évanouissement par trajet multiple et puis sélectionner le mode de transmission de liaison descendante MIMO qui doit être testé depuis de multiples modes de transmission de liaison descendante MIMO configurés et émettre le signal de retard d'évanouissement par trajets multiples qui est conforme à la caractéristique du mode de transmission de liaison descendante MIMO sélectionné dans une chambre pour tester le terminal sans fil MIMO devant être testé.

2. Dispositif selon la revendication 1, dans lequel le mode de transmission de liaison descendante MIMO comprend au moins un des éléments suivants : mode à antenne simple, multiplexage spatial en boucle fermée, multiplexage spatial en boucle ouverte, diversité de transmission, multiplexage spatial, MIMO multi-utilisateurs, précodage et formation de faisceaux.

3. Dispositif de sélection d'un mode de transmission de terminal sans fil entrée multiple sortie multiple (MIMO), comprenant :
un module de sélection de mode, qui est conçu pour : lors d'un test réel en liaison radio (OTA), tester un terminal sans fil MIMO, sélectionner un mode de transmission de liaison descendante MIMO qui doit être testé et déclencher un module de transmission de liaison descendante MIMO correspondant au mode de transmission de liaison descendante MIMO sélectionné ; et
le module de transmission de liaison descendante MIMO, qui est conçu pour émettre un signal de test de liaison descendante qui est conforme à une caractéristique du mode de transmission de liaison descendante MIMO choisi selon un déclenchement du module de sélection de mode ;
**caractérisé en ce que** le dispositif est en outre conçu pour :
recevoir un signal depuis une station de base (BS), un émulateur et puis sélectionner le mode de transmission de liaison descendante MIMO qui doit être testé depuis de multiples modes de transmission de liaison descendante MIMO configurés et émettre un signal de liaison descendante qui est conforme à la caractéristique du mode de transmission de liaison descendante MIMO sélectionné vers un simulateur de voie à évanouissement par trajets multiples qui va former un signal de retard d'évanouissement par trajets multiples à partir du signal de liaison descendante provenant de l'unité de sélection de mode de transmission MIMO et entrer le signal de retard d'évanouissement par trajets multiples dans une chambre pour tester le terminal sans fil MIMO devant être testé ;
ou **caractérisé en ce que** le dispositif est en outre conçu pour :
recevoir un signal de retard d'évanouissement par trajets multiples formé à partir du signal provenant d'une station de base (BS), d'un émulateur par un simulateur de voie à évanouissement par trajets multiples et puis sélectionner le mode de transmission de liaison descendante MIMO qui doit être testé à partir de multiples modes de transmission de liaison descendante MIMO configurés et émettre le signal de retard d'évanouissement par trajets multiples qui est conforme à la caractéristique du mode de transmission de liaison descendante de liaison descendante MIMO sélectionné dans une chambre, pour tester le terminal sans fil MIMO devant être testé.

4. Dispositif selon la revendication 3, dans lequel le mode de transmission de liaison descendante MIMO comprend au moins un des éléments suivants : mode à antenne simple, multiplexage spatial en boucle fermée, multiplexage spatial en boucle ouverte, diversité de transmission, multiplexage spatial, MIMO multi-utilisateurs, précodage et formation de faisceaux.

5. Procédé de test d'un terminal sans fil entrée multiple sortie multiple (MIMO), comprenant :
lors d'un test réel en liaison radio (OTA), test du terminal sans fil MIMO, la sélection (502) d'un mode de transmission de liaison descendante MIMO qui doit être testé à partir de multiples modes de transmission de liaison descendante MIMO configurés, et l'émission (503) d'un signal de test de liaison descendante qui est conforme à une caractéristique du mode de transmission de liaison descendante MIMO sélectionné ;
**caractérisé en ce que** :
avant l'étape de sélection du mode de transmission de liaison descendante MIMO qui doit être testé, le procédé comprend en outre : une station de base (BS), un émulateur simulant une station de base émettant un signal vers une unité de sélection de mode de transmission MIMO (501) ;
l'étape d'émission du signal de test de liaison descendante qui est conforme à la caractéristique du mode de transmission de liaison descendante MIMO sélectionné comprend : l'unité de sélection de mode de transmission MIMO recevant le signal depuis l'émulateur de BS et puis la sélection du mode de transmission de liaison descendante MIMO qui doit être testé depuis de multiples modes de transmission de liaison descendante MIMO configurés et l'émission d'un signal de liaison descendante qui est conforme à la caractéristique du mode de transmission de liaison descendante MIMO sélectionné vers le simulateur de voie à évanouissement par trajets multiples ; et
après l'étape d'émission du signal de test de liaison descendante qui est conforme à la caractéristique du mode de transmission de liaison descendante MIMO sélectionné, le procédé comprend en outre : un simulateur de voie à évanouissement par trajets multiples (504) formant un signal de retard d'évanouissement par trajets multiples à partir du signal de liaison descendante et l'entrée du signal de retard d'évanouissement par trajets multiples dans une chambre, pour tester le terminal sans fil MIMO devant être testé (505) ;
ou **caractérisé en ce que** :
avant l'étape de sélection du mode de transmission de liaison descendante MIMO qui doit être testé, le procédé comprend en outre : une station de base (BS), un émulateur simulant une station de base émettant un signal vers un simulateur de voie à évanouissement par trajets multiples, et le simulateur de voie à évanouissement par trajets multiples formant un signal de retard d'évanouissement par trajets multiples et l'entrée du signal de retard d'évanouissement par trajets multiples vers une unité de sélection de mode de transmission MIMO ; et
l'étape d'émission du signal de test de liaison descendante qui est conforme à la caractéristique du mode de transmission de liaison descendante MIMO sélectionné comprend : l'unité de sélection de mode de transmission MIMO émettant le signal de retard d'évanouissement par trajets multiples qui est conforme à la caractéristique du mode de transmission de liaison descendante MIMO sélectionné dans une chambre, pour tester le terminal sans fil MIMO devant être testé.

6. Procédé selon la revendication 5, comprenant en outre : le préréglage d'un mode de transmission de liaison descendante MIMO devant être testé.

7. Procédé selon la revendication 5, dans lequel l'étape de test du terminal sans fil MIMO devant être testé comprend : le test du terminal sans fil MIMO devant être testé par un procédé de mesure de chambre ou un procédé de mesure de chambre de réverbération.

8. Procédé selon l'une quelconque des revendications 5 ou 6, dans lequel le mode de transmission de liaison descendante MIMO comprend au moins un des éléments suivants : mode à antenne simple, multiplexage spatial en boucle fermée, multiplexage spatial en boucle ouverte, diversité de transmission, multiplexage spatial, MIMO multi-utilisateurs, précodage et formation de faisceaux ; et/ou,
lorsqu'un dit mode de transmission de liaison descendante MIMO est sélectionné, l'étape de sélection du mode de transmission de liaison descendante MIMO qui doit être testé est réalisé en fermant ou en ouvrant un commutateur pour sélectionner le mode de transmission de liaison descendante MIMO qui doit être testé ; lorsque de multiples dits modes de transmission de liaison descendante MIMO sont sélectionnés, l'étape de sélection du mode de transmission de liaison descendante MIMO qui doit être testé est réalisé en sélectionnant les modes de transmission de liaison descendante MIMO doivent être testés un par un dans un mode d'invitation à émettre.
